Europäisches Patentamt

European Patent Office

Office européen des brevets

(19)

(11) Numéro de publication: **0 089 872**
**B1**

## (12) FASCICULE DE BREVET EUROPÉEN

(45) Date de publication du fascicule du brevet:
23.07.86

(51) Int. Cl.⁴: **H 04 N 17/00**

(21) Numéro de dépôt: **83400502.7**

(22) Date de dépôt: **11.03.83**

(54) **Dispositif et appareil de saisie sélective de signaux, notamment de télévision en vue de leur caractérisation par un calculateur numérique.**

(30) Priorité: **19.03.82 FR 8204753**

(43) Date de publication de la demande:
**28.09.83 Bulletin 83/39**

(45) Mention de la délivrance du brevet:
**23.07.86 Bulletin 86/30**

(84) Etats contractants désignés:
**BE DE GB**

(56) Documents cité:
**FR-A-2 408 959**

**WIRELESS WORLD, vol. 81, no. 1469, janvier 1975, pages 37-42, Haywards Heath, Sussex, GB., J. SCHAFFER: "Computer monitoring of TV signals: An experimental digital system for the monitoring of unmanned television transmitters"**
**TELECOMMUNICATIONS & RADIO ENGINEERING, vol. 34/35, no. 5, mai 1980, pages 7-23, Silver Spring, Maryland, USA, M.I. KRIVOSHEYEV et al.: "Automatic measurements of the parameters of a television signal and the quality of a TV channel"**
**JOURNAL OF THE SMPTE, vol. 83, no. 9, septembre 1974, pages 702-707, New York, USA, g.A. McKENZIE: "Automated television waveform measurement by use of a digital computer"**
**TEKSCOPE, vol. 12, no. 2, 1980, pages 10-12, Voorschoten, NL, J. LEWIS: "Developing a**

(73) Titulaire: **THOMSON- CSF, 173, Boulevard Haussmann, F-75379 Paris Cedex 08 (FR)**

(72) Inventeur: **Pham Van Cang, Luc, THOMSON- CSF SCPI 173, bld Haussmann, F-75379 Paris Cedex 08 (FR)**

(74) Mandataire: **Lincot, Georges, THOMSON- CSF SCPI 19, avenue de Messine, F-75008 Paris (FR)**

(56) Documents cité: (suite)
**practical automatic television parameter measuring and logging system"**

EP 0 089 872 B1

### Description

La présente invention concerne un dispositif de saisie sélective de signaux se succédant dans le temps, repérables par des adresses associées à leurs positions relatives, en vue de leur caractérisation par un calculateur numérique et un appareil de saisie de signaux de télévision mettant en oeuvre ce dispositif.

L'invention s'applique notamment à la caractérisation de signaux de télévision.

La caractérisation d'un signal et plus particulièrement d'un signal de télévision est conventionnellement effectuée par des dispositifs de mesure, d'utilisation générale, tels que des oscilloscopes, ou d'utilisation plus spécialisée telle que des vecteurs-scopes, mesureurs de bruit, voltmètres vidéo, etc...

La plupart de ces dispositifs peuvent être remplacés par un dispositif de saisie du signal couplé à un calculateur numérique et à un organe de visualisation graphique, ce qui représente dans l'état actuel de la technique, une réduction sensible du coût et une amélioration des performances.

Toutefois lorsque le signal saisi a une durée relativement courte, de l'ordre de 100 microsecondes, les calculateurs numériques ne peuvent accéder directement au signal que leur transmet le dispositif de saisie. Ces difficultés, rencontrées par example en télévision, sont essentiellement dues au format analogique du signal dont la durée est de 64 microsecondes dans le système à 625 lignes, au spectre étendu de celui-ci, et à la vitesse limitée de traitement des calculateurs numériques actuels qui sont limités dans leurs performances à la fois aux niveaux de l'acquisition, des rangements des données en mémoire, des temps de traitement, qu'au niveau des sorties des résultats, par le temps de cycle d'exécution des instructions qui apparaît long, de l'ordre de 10 microsecondes, relativement à la durée du signal.

On connaît toutefois des dispositifs de conversion analogique-numérique à grande vitesse qui permettent à un calculateur de saisir une portion d'un signal de télévision. De tels dispositifs sont constitués généralement d'un convertisseur pouvant travailler sur des échantillons composés d'un nombre réduit de bits, généralement huit bits, à des fréquences élevées de l'ordre de 25MHz et d'une mémoire tampon pouvant mémoriser une ou deux lignes de télévision. L'acquisition du signal se fait en temps réel sur une ou deux lignes et un transfert des échantillons mémorisés dans la mémoire tampon est effectué à destination du calculateur à une vitesse beaucoup plus faible. De tels dispositifs ne permettent pas une saisie très fidèle du signal, notamment des signaux de mesure et de test qui sont nécessaires à une caractérisation précise du signal.

Le but de l'invention est de pallier les inconvénients précités, à l'aide d'un dispositif de saisie sélective de signaux se succédant dans le temps qui permet à un calculateur numérique de traiter n'importe quel signal reçu par le dispositif, pour reconnaître un certain nombre de caractéristiques du signal, notamment les paramètres qui lui permettront de spécifier avec précision soit son amplitude, soit sa fréquence, soit sa phase relativement à un autre signal, soit des instants caractéristiques d'un transitoire, ou encore ses caractéristiques de bruit.

L'invention a donc pour objet un appareil de saisie de signaux de télévision représentatifs chacun de l'état de luminance et de chrominance d'un point d'une image de télévision, en vue de leur caractérisation par un calculateur numérique caractérisé en ce qu'il comprend:

— un générateur d'adresse courante composé d'un premier compteur progressant au rythme des instants d'échantillonnage du point courant pour donner l'adresse du point courant sur une ligne de balayage de l'image de télévision et un deuxième compteur progressant au rythme des signaux de synchronisation de ligne du signal de télévision pour donner l'adresse du point coutant,

— un bloc d'échantillonnage pour échantillonner les signaux de télévision reçus par l'appareil comprenant un premier registre de mémorisation de l'adresse du point sur la ligne à échantillonner et un deuxième registre de mémorisation de l'adresse de ligne du point à èchantillonner, respectivement couplés à un premier et un deuxième compteur programmables pouvant charger les contenus du premier et du deuxième registre de mémorisation de l'adresse de point échantillonné,

— un dispositif de comparaison comprenant un premier comparateur relié par une entrée à la sortie d'un premier compteur du générateur d'adresse courante et relié par une deuxième entrée à la sortie du premier compteur programmable du bloc d'échantillonnage ainsi qu'un deuxième comparateur relié par une entrée à la sortie du deuxième compteur du générateur d'adresse courante et relié par une deuxième entrée à la sortie du deuxième compteur programmable du bloc d'échantillonnage pour détecter une égalité entre l'adresse du point courant et l'adresse du point désiré contenu dans les premier et deuxième compteur programmables et autoriser la commande du bloc d'échantillonnage,

— un convertisseur analogique-numérique ayant un cycle de conversion et étant couplé au bloc d'échantillonnage pour convertir l'amplitude des échantillons fournis par le bloc d'échantillonnage en signaux numériques et pour appliquer en fin de cycle de conversion un signal d'incrémentation d'une unité des contenus du premier et deuxième compteur programmables

et une logique de commande commandée par le calculateur numérique et adressée par l'adresse courante pour fournir les signaux de commande du bloc d'échantillonnage.

Ces dispositions sont particulièrement avantageuses car elles permettent un échantillonnage précis de signaux de télévision par une analyse fine du point de l'image de télévision qui est sélectionné. Cette analyse est faite sélectivement en désignant l'adresse du signal, ou du point dans l'image transmise, à l'aide d'un organe extérieur au dispositif tel qu'un calculateur numérique, et les informations caractérisant le signal ou le point désigné sont lues une ou plusieurs fois par le calculateur connecté au dispositif qui ainsi a tout son temps pour traiter les informations relatives au signal ou au point dont

l'analyse est demandée.

D'autres caractéristiques et avantages de l'invention apparaîtront au cours de la description faite au regard des dessins annexés, donnés uniquement à titre d'exemple, d'un dispositif de saisie de signaux conçu plus particulièrement pour la saisie de signaux de télévision composé de signaux de luminance et de chrominance et dans lesquels:

— La figure 1 est une représentation sous forme synoptique du dispositif de saisie de signaux de télévision selon l'invention.

— La figure 2 est une représentation détaillée des éléments constituant le dispositif de la figure 1.

— La figure 3 montre un exemple de réalisation du réseau de traitement et de mise en format du signal de la figure 2.

— La figure 4 représente le décodeur des signaux de commande de la figure 2.

— La figure 5 est une représentation de la logique de commande de la figure 2.

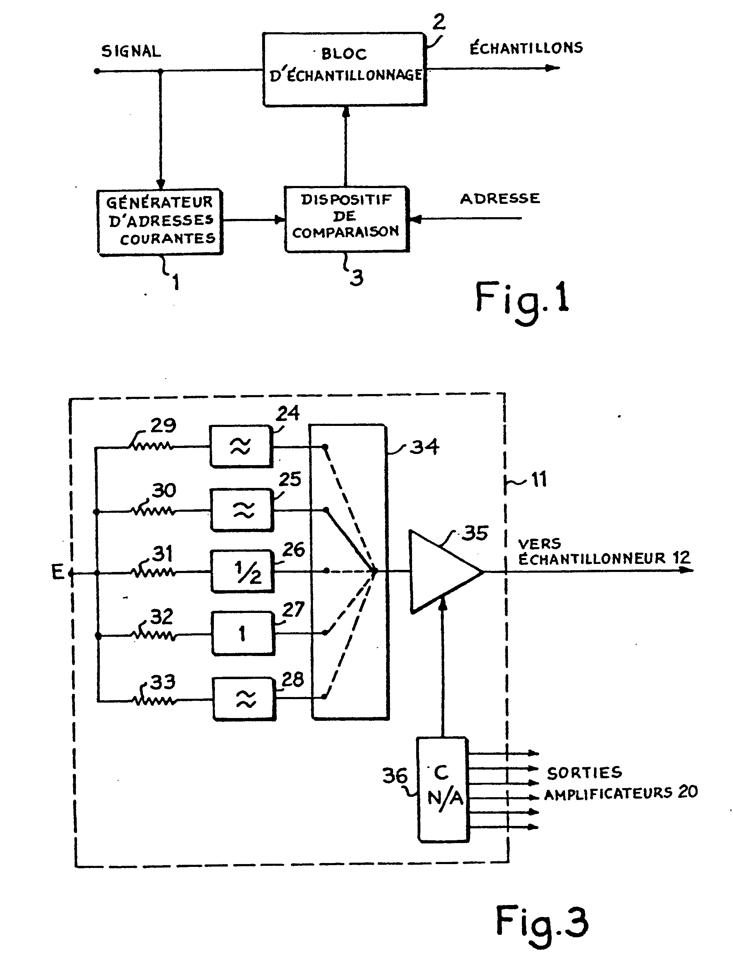

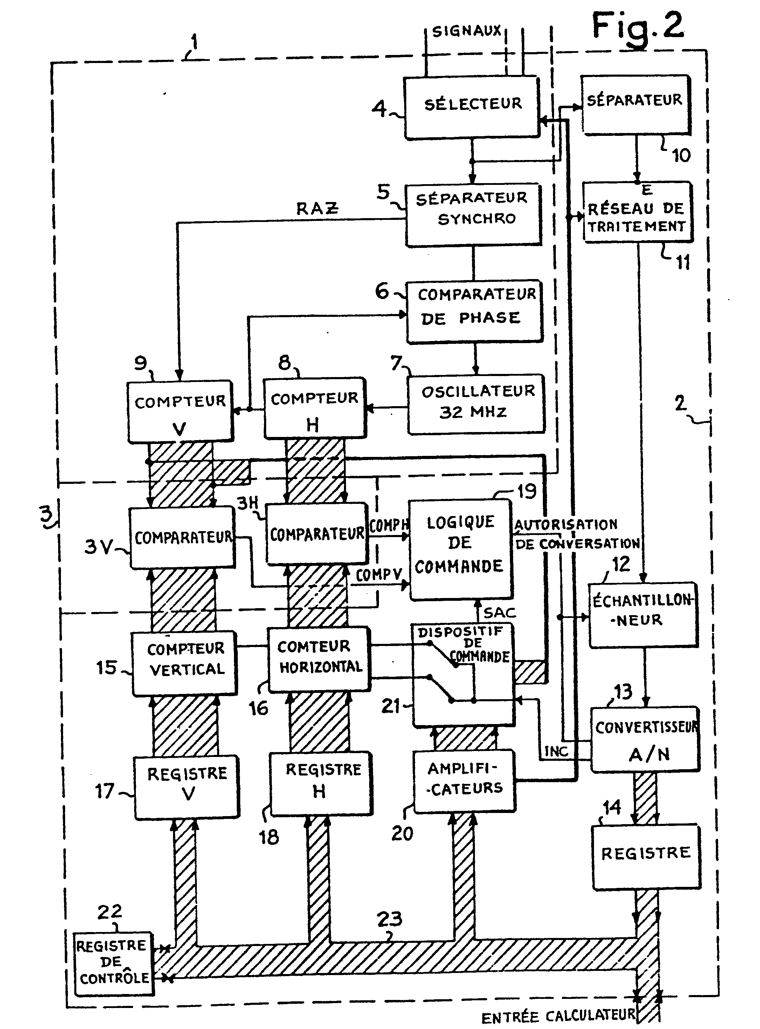

Le dispositif de saisie de signaux, particulièrement applicables aux signaux de télévision, représenté à la figure 1 comprend un générateur d'adresses courantes 1, un bloc d'échantillonnage 2 et un dispositif de comparaison 3. L'expression "adresse courante" désigne ici l'adresse du point courant de l'image de télévision qui est en cours de transmission, le signal de télévision associé étant appliqué à l'entrée du dispositif pour être éventuellement saisi. La structure du signal de télévision dont il s'agit ici n'a pas besoin d'être décrite pour la compréhension de l'invention, on indique toutefois que ce signal est celui défini par les normes internationales actuellement en vigueur, une définition de ce signal pourra être trouvée dans le livre intitulé "Radiotechnique et Télévision" pages 186 à 190 de Bogdan Grabowski édité par la Société DUNOD (Paris) dans la collection aide mémoire. Ce signal est transmis suivant une séquence correspondant à l'analyse de l'image par un organe extérieur au dispositif non représenté qui peut être une caméra de télévision ou tout autre générateur; il est appliqué aux entrées respectives du générateur d'adresse courante 1 et du bloc d'échantillonnage 2. A un instant donné, le générateur d'adresse courante 1 calcule pour ce signal de télévision reçu, l'adresse du point de l'image qui lui correspond et transmet cette adresse à une entrée du dispositif de comparaison 3. Le dispositif de comparaison 3 reçoit sur une autre entrée l'adresse du point désigné dans l'image pour lequel une caractérisation du signal de télévision correspondant est demandée, de façon à comparer cette adresse à l'adresse courante délivrée par le générateur d'adresses courantes 1. Le résultat de la comparaison est transmis à une entrée de commande du bloc d'échantillonnage 2. Lorsque le bloc d'échantillonnage 2 est commandé par le dispositif de comparaison 3 le signal de télévision qui est présent à l'entrée du bloc d'échantillonnage 2 est pris en compte par le bloc d'échantillonnage pour être converti en une suite d'échantillons numériques.

Les détails de réalisation du dispositif représenté à la figure 1 sont maintenant décrits à l'aide du mode de réalisation de l'invention représenté à la figure 2. Sur cette figure, le générateur d'adresse courante 1, représenté à l'intérieur d'un rectangle en lignes pointillées comprend un sélecteur d'entrées 4, un séparateur de synchronisation 5, un dispositif d'asservissement d'horloge interne composée d'un comparateur de phase 6, d'un oscillateur 7 et d'un compteur d'adresses horizontales programmables 8 ainsi que d'un compteur d'adresses verticales programmables 9. Le sélecteur d'entrées 4 comprend plusieurs entrées qui sont chacune reliées aux sorties respectives de générateurs de signaux de télévision, tels que des caméras non représentées qui peuvent ainsi être connectées sélectivement à l'entrée du dispositif. Le signal de télévision transmis par le générateur de signal sélectionné est reçu à l'entrée d'un séparateur de synchronisation 5 qui sépare du signal de télévision les tops de synchronisation de ligne et de trame. Les tops de synchronisation de ligne sortant du séparateur 5 sont appliqués sur une entrée du comparateur de phase 6 qui reçoit sur une autre entrée des tops de même fréquence que celle des tops de synchronisation de ligne délivrés par le compteur 8. Le compteur 8 est composé de dix basculeurs et a une capacité de 2048, il progresse au rythme des signaux délivrés par l'oscillateur 7, dont la fréquence est dans l'exemple particulier de réalisation de l'invention de 32 MHz. Les tops d'horloge délivrés par le compteur 8 ont par conséquent une période de 64 microsecondes qui correspond à la durée d'une ligne de balayage d'une imager de télévision standard. Le comparateur 6 compare la phase des tops des signaux transmis par le compteur 8 à la phase des tops de synchronisation de ligne du signal de télévision reçu pour délivrer un signal de commande d'ajustement de la phase des signaux émis par l'oscillateur 7 de façon à annuler l'écart de phase entre les tops de synchronisation reçus et les tops délivrés par le compteur 8. Les tops délivrés par le compteur 8 sont également appliqués à l'entrée du compteur vertical 9 pour lui permettre de progresser au rythme des tops de synchronisation ligne du signal de télévision et de compter les lignes d'image reçues par le dispositif. Dans l'exemple particulier de réalisation de l'invention, le compteur 9 est composé de dix basculeurs et est remis à zéro par les tops RAZ de synchronisation de trame délivrés par le séparateur de synchronisation 5, toutes les 625 lignes, pour pouvoir fonctionner avec un système de télévision composé de trames d'image de 625 lignes. Les sorties des compteurs 8 et 9 sont connectées respectivement à des premières entrées des comparateurs 3H et 3V composant le dispositif de comparaison 3, et transmettent par conséquent aux entrées de ces comparateurs, les adresses du point d'image courant à l'intérieur de l'image de télévision. La position d'adresse de la ligne étant fournie par le compteur 9 et la position ou l'adresse du point sur la ligne fournie par le compteur 8.

Le bloc d'échantillonnage 2 est représenté à l'intérieur de lignes en pointillés sur la figure 2. Il comprend un séparateur du signal de télévision 10, un réseau 11 de traitement et de mise en format du signal de télévision, un échantillonneur 12, un convertisseur analogique numérique 13, et un registre 14. Le bloc d'échantillonnage 2 comprend également des compteurs d'adresse programmables 15 et 16, dont les entrées programmables sont respectivement reliées aux sorties de registres 17 et 18, et dont les sorties sont reliées à des deuxièmes entrées des comparateurs 3V et 3H respectivement, une logique de commande 19, des amplificateurs de commande 20, un dispositif de commande 21 de la progression des compteurs 15 et 16 et de commande de la logique de commande 19 ainsi qu'un registre de commande 22. Un bus 23 de transmission bi-directionnel de signaux relie les entrées des registres 17, 18 et des amplificateurs 20 ainsi que les sorties des registres de commande 22, et du registre 14 pour réaliser la connection du dispositif au bus d'adresses et de données du calculateur extérieur non représenté. L'amplificateur séparateur de signaux de télévision 10 a son entrée reliée à la sortie du sélecteur 4 et reçoit ainsi le signal de télévision sélectionné par le sélecteur d'entrée. La sortie de sélecteur 4 est reliée à l'entrée du réseau 11 de traitement et de mise en format du signal de télévision 11 dont les éléments constitutifs sont représentés à la figure 3.

Le réseau de traitement et de mise en format de la figure 3 est constitué d'un filtre passe-bas 24, d'un filtre passe-haut 25, d'un atténuateur 26, de rapport d'atténuation 1/2, d'un atténuateur 27 de rapport d'atténuation 1, et d'un filtre passe-bas 28. Les entrées des éléments précités sont reliées respectivement à l'entrée E du réseau 11 à travers les résistances respectives 29 à 33. Les sorties respectives des éléments précités 24 à 28 sont reliées aux entrées respectives d'un sélecteur 34 dont la sortie est reliée à l'entrée d'un amplificateur à gain variable 35 commandé par la sortie d'un convertisseur numérique-analogique 36. Les entrées du convertisseur numérique-analogique 36 sont reliées respectivement aux sorties des amplificateurs de commande 20. Le réseau de traitement et de mise en format 11 peut donc être commandé directement, à partir des informations de commande provenant d'un calculateur extérieur au dispositif de façon à sélectionner le mode désiré de traitement du signal, en positionnant l'entrée correspondante du sélecteur 34 sur un des éléments de correction 24 à 28 et en ajustant le niveau de sortie du convertisseur numérique-analogique 36 pour ajuster le gain de l'amplificateur 35. Le signal sortant de l'amplificateur 35 est ensuite appliqué à l'entrée du dispositif d'échantillonnage 12 de la figure 2. Le circuit d'échantillonnage 12 a son entrée de commande reliée à la sortie de la logique de commande 19 qui délivre un signal de commande lorsqu'une autorisation de conversion est donnée par le dispositif de comparaison 3 ou par le dispositif de commande 21.

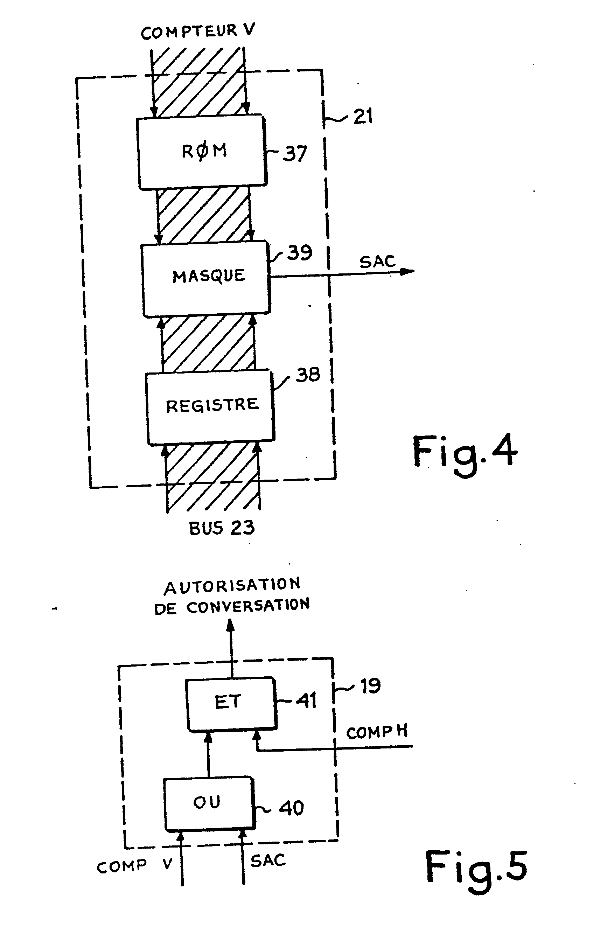

Le dispositif de commande 21 est représenté à la figure 4, il se compose d'une mémoire ROM 37 adressée sur ses entrées par le compteur vertical 9, d'un registre 38 d'autorisation de fonctionnement relié par ses entrées au bus 23 reliant le dispositif au calculateur extériur, et d'un circuit de masque 39 ayant des premières entrées reliées aux sorties de la mémoire 37 et des deuxièmes entrées reliées aux sorties du registre 38.

La mémoire 37 contient des autorisations de conversion préprogrammées pour des lignes particulières de l'image de télévision, permettant par exemple de sélectionner des lignes de test particulières dans chaque trame de l'image, ou d'effectuer des mesures sur une trame complète. Les autorisations préprogrammées apparaissent sur les fils de sortie de la mémoire 37 lorsqu'elles sont convenablement adressées par le compteur 9. Ces autorisations peuvent être toutes validées ou partiellement masquées par les bits d'information de masquage contenus dans le registre 38 qui y ont été chargés au préalable par le calculateur extérieur au dispositif. La validation des autorisations de conversion est effectuée d'une façon connue par le circuit de masque 39 qui délivre sur sa sortie un signal d'autorisation de conversion SAC, chaque fois qu'une autorisation de conversion délivrée sur une sortie de la mémoire 37 est validée par le contenu du registre 38. Le signal d'autorisation de conversion SAC est transmis sur la sortie du dispositif de commande 21 à destination de la logique de commande 19.

La logique de commande 19 est représentantée à la figure 5. Elle comprend une porte OU 40 reliée par une première entrée à la sortie du dispositif de commande 21 transmettant le signal SAC, par une deuxième entrée à la sortie du comparateur vertical 3V, et par sa sortie à une première entrée d'une porte ET 41 dont l'autre entrée est reliée à la sortie du comparateur horizontal 3H. La sortie de la porte ET 41 constitue la sortie de la logique de commande 19 et délivre un signal de commande d'échantillonnage chaque fois qu'une égalité d'adresse est détectée par le comparateur vertical 3V ou qu'un signal d'autorisation de conversion SAC est délivré par le dispositif de commande 21 et que le comparateur horizontal 3H trouve une égalité d'adresse entre les contenus des compteurs 8 et 16.

Lorsque le dispositif d'échantillonnage 12 est commandé par la logique de commande 19, l'echantillon du signal mesuré par le dispositif d'échantillonnage 12 est appliqué à l'entrée du convertisseur numérique-analogique 13. La logique de commande 19 déclenche également un cycle de conversion de convertisseur analogique-numérique 13 pour transformer l'ampliude de l'échantillon appliqué sur l'entrée du convertisseur en une grandeur numérique qui est transmise à l'entrée du registre de mémorisation 14. Le registre 14 sert de registre de tampon entre le dispositif et le calculateur extérieur. A la fin de son cycle de conversion, le convertisseur analogique-numérique 13 envoie un signal INC à destination des compteurs programmables 14 ou 16 pour incrémenter de une unité leur contenu. Cette incrémentation est autorisée par les amplificateurs de commande 20 qui reçoivent sur leurs entrées des impulsions d'un signal de commande d'incrémentation transmises par le calculateur extérieur au dispositif.

Le fonctionnement de dispositif qui vient d'être décrit est le suivant. Les coordonnées $X_i$ et $Y_i$ du signal à caractériser sont transmises par le calculateur sous la forme de signaux numériques sur le bus de liason 23 à destination des registres 17 et 18. Le signal de télévision à caractériser est sélectionné par le sélecteur 4 et est appliqué d'une part à l'entrée du séparateur de synchronisation 5 et d'autre part à l'entrée du séparateur 10. Le calculateur extérieur transmet également les bits de commande à destination de registre de commande 22 pour masquer les sorties de la mémoire morte 37 du dispositif de commande 21 et pour commander le réseau de traitement et de mise en format 11. Les adresses horizontales et verticales du signal de télévision à caractériser contenues dans les registres 17 et 18 sont transférées à l'intérieur des compteurs programmables 15 et 16. L'oscillateur 7 qui est asservi au top de synchronisation délivré par le séparateur de synchronisation 5, fait progresser les compteurs horizontaux et verticaux 8 et 9 qui délivrent chacun une composante de l'adresse courante du point de l'image en cours de transmission et ces adresses horizontales et verticales sont comparées aux adresses du point désiré contenu dans les compteurs 15 et 16, par les comparateurs 3V et 3H. Lorsque les comparateurs 3H et 3V détectent une égalité entre les adresses courante et désirée, ils délivrent chacun un signal d'autorisation de conversion, respectivement COMPH et COMPV, qui sont transmis aux entrées de la logique de commande 19. Dans le même temps la mémoire morte 37 est adressée par les sorties du compteur vertical 9. Cette mémoire 37 contient des adresses des lignes pour lesquelles une caractérisation de signaux peut être directement commandée par le calculateur. La sélection de ces lignes est effectuée par le circuit de masque 39 qui reçoit sur ses entrées les informations de masque provenant de du calculateur et transmises au travers du registre d'autorisation de fonctionnement 38. Lorsqu'il y a coïncidence entre les bits du mot d'information de masque et les bits de sortie de la mémoire morte 37 un signal d'autorisation de conversion SAC est délivré par le circuit de masque 39. La mémoire morte 37 et le circuit de masque 39 permettent de sélectionner plusieurs lignes de test insérées dans chaque trame d'image, et permettent également si la mémoire est convenablement programmée de faire des mesures sur l'ensemble d'une trame et des mesures de synchronisation de trame. Les autorisations de conversion agissent sur l'entrée de commande du convertisseur analogique-numérique 13 et déclenchent à chacune de leur apparition un cycle de conversion. A chaque fin de cycle de conversion un signal d'incrémentation INC est transmis à une entrée du dispositif de commande 21 qui retransmet ce signal aux entrées d'incrémentation des compteurs verticaux et horizontaux 15 et 16 lorsque le signal INC est validé par les amplificateurs de commande 20 recevant les signaux de commande provenant du calculateur extérieur par le bus 23. La validation du signal d'incrémentation par le dispositif de commande 21 permet par conséquent un adressage implicite des échantillons suivant quatre modes différents, un mode où il n'existe pas d'incrémentation des compteurs d'adresse 15 et 16, un mode où on incrémente seulement le compteur d'adresse horizontales 16, un mode où on incrémente seulement le compteur d'adresses verticales 15, et un mode où les deux compteurs horizontaux et verticaux 15 et 16 sont simultanément incrémentés. Dans le cas où n'y a pas d'incrémentation le dispositif échantillonne toujours le même point de l'image, soit un point par trame ou un point par image. Dans le cas où seulement l'adresse horizontale du point d'image est incrémenteée par le compteur 16 le dispositif analyse une ligne, à la cadence de 1 point par image, l'adresse de la ligne étant indiquée par le contenu du compteur 15. Dans le cas d'une incrémentation verticale seule, le dispositif analyse une ligne verticale dont l'adresse correspond au contenu du compteur horizontal 16 et cette analyse se fait à la cadence d'un point par ligne. Dans le cas où il existe à la fois une incrémentation horizontale et une incrémentation verticale le dispositif analyse une ligne oblique à la cadence d'un point par ligne et les adresses des points successifs analysés sont indiquées par le contenu des registres 15 et 16.

De ce fait le dispositif d'adressage permet les utilisations d'un convertisseur analogique-numérique plus précis que les convertisseurs en temps réel de l'art antérieur, car l'analyse d'un point d'image se fait toujours à la cadence des signaux de synchronisation de trame ou de la ligne, ce qui représente une vitesse de conversion relativement lente et explique par conséquent la grande précision de caractérisation qui peut être obtenue.

L'adressage implicite ci-dessus est réalisé par les compteurs d'adresses 15 et 16 et complété par un adressage explicite réalisé par le dispositif de commande 21 qui sera utilisé plus particulièrement pour les caractérisations de signaux très usuels ou standardisés des signaux de télévision, notamment pour la caractérisation des paramètres des signaux de test insérés dans l'effacement de trame aux lignes 17, 18, 330 et 331.

Bien que le dispositif qui vient d'être décrit s'applique plus particulièrement à la caractérisation de signaux de télévision, il va de soi que ce dispositif peut très bien être utilisé dans d'autres systèmes de caractérisation de signaux, on comprendra que ce dispositif, peut être facilement inséré parmi d'autres constituants d'un ensemble de caractérisation ou de mesure assisté par calculateur. Dans ce cas le fonctionnement du dispositif sera déterminé par un programme de caractérisation ou de mesure qui déterminera les paramètres de saisie totale ou fragmentaire des signaux qui sont nécessaires à l'exécution de la tâche qui est en cours. Par exemple ce programme déterminera l'adresse horizontale et verticale du point de départ des signaux à saisir, le nombre de points à saisir, les conditions de la saisie, ainsi que la trajectoire de la saisie. Le calculateur passera alors les paramètres de commande au dispositif qui les rangera dans ses registres de commande ou de contrôle correspondats. Le dispositif acquiéra les données demandées et les transmettra au fur et à mesure au calculateur qui les rangera ou les accumulera dans sa mémoire centrale et arrêtera le processus lorsque les données seront complètement transférées.

Bien que les principes de la présente invention aient été décrits ci-dessus en relation avec un exemple particulier de réalisation, on comprendra également que la description n'a été faite qu'à titre d'exemple et ne limite pas la portée de l'invention.

**Revendications**

1. Appareil de saisie de signaux de télévision représentatifs chacun de l'état de luminance et de chrominance d'un point d'une image de télévision, en vue de leur caractérisation par un calculateur numérique caractérisé en ce qu'il comptend:

— un générateur d'adresse courante composé d'un premier compteur (8) progressant au rythme des instants d'échantillonnage du point courant pour donner l'adresse du point courant sur une ligne de balayage de l'image de télévision et un deuxième compteur (9) progressant au rythme des signaux synchronisation de ligne du signal de télévision pour donner l'adresse du point courant,

— un bloc d'échantillonnage (2) pour échantillonner les signaux de télévision reçus par l'appareil comprenant un premier registre (18) de mémorisation de l'adresse du point sur la ligne à échantillonner et un deuxième registre (17) de mémorisation de l'adresse de ligne du point à échantillonner, respectivement couplés à un premier et à un deuxième compteur programmables (16, 15) pouvant charger les contenus de premier et du deuxième registre de mémorisation de l'adresse du point échantillonné,

— un dispositif de comparaison comprenant un premier comparateur (3H) relié par une entrée à la sortie d'un premier compteur (8) du générateur d'adresses courantes et relié par une deuxième entrée à la sortie du premier compteur (16) programmable du bloc d'échantillonnage (2) ainsi qu'un deuxième comparateur (3V) relié par une entrée à la sortie du deuxième compteur (9) du générateur d'adresse courante (8) et relié par une deuxième entrée à la sortie du deuxuème compteur (15) programmable du bloc d'échantillonnage (2) pour détecter une égalité entre l'adresse du point courant et l'adresse du désiré contenu dans les premier et deuxième compteur programmables (16, 15) et autoriser la commande du bloc d'échantillonnage (2).

— un convertisseur analogique-numérique (13) ayant un cycle de conversion et étant couplé au bloc d'échantillonnage (2) pour convertir l'amplitude des échantillons fournis par le bloc d'échantillonnage (2) en signaux numériques et pour appliquer en fin de conversion un signal d'incrémentation de une unité des contenus du premier et de deuxième compteur programmables (16, 15),

et une logique de commande (19) commandée par le calculateur numérique et adressée par l'adresse courante pour fournir les signaux de commande du bloc d'échantillonnage.

2. Appareil selon la revendication 1, caractérisé en ce que les signaux pour incrémenter les contenus des premier et deuxième compteur programmables sont validés par le dispositif de commande (21) du dispositif de saisie des signaux de télévision.

3. Appareil selon la revendication 1, caractérisé en ce que le bloc d'échantillonnage comprend également un réseau de traitement (11) des signaux de télévision reçus, interposé entre l'echantillonneur (12) et l'entrée du dispositif pour atténuer et/ou filtrer le signal avant sa transmission au bloc d'échantillonnage de façon à l'adapter en amplitude et/ou en spectre, au format du signal de télévision.

**Patentansprüche**

1. Gerät zur Erfassung von Fernsehsignalen, die jeweils repräsentativ sind für den Luminanzzustand und den Chrominanzzustand eines Fernsehbildpunktes, im Hinblick auf ihre Kennzeichnung durch einen digitalen Rechner, dadurch gekennzeichnet, daß es enthält:

— einen Generator zur Erzeugung einer laufenden Adresse, der zusammengesetzt ist aus einem ersten Zähler (8), der im Rhythmus der Abtastmomente des laufenden Punktes weiterzählt, um die Adressen des laufenden Punktes auf einer Ablenkzeile des Fernsehbildes anzugeben, und einem zweiten Zähler (9), der im Rhythmus der Zeilensynchronisationssignale des Fernsehsignals weiterzählt, um die Adresse des laufenden Punktes abzugeben,

— einen Abtastblock (2) zur Abtastung der durch das Gerät empfangenen Fernsehsignale, mit einem ersten Register (18) zur Speicherung der Adresse des Punktes auf der abzutastenden Zeile und einem zweiten Register (17) zur Speicherung der Adresse der Zeile des abzutastenden Punktes, welche an einen ersten bzw. an einen zweiten programmierbaren Zähler (16, 15) angekoppelt sind, in den die Inhalte des ersten bzw. zweiten Registers zur Speicherung der Adresse des abgetasteten Punktes eingeladen werden können,

— eine Komparatorvorrichtung, welche einen ersten Komparator (3H) enthält, der mit einem Eingang an den Ausgang eines ersten Zählers (8) des Generators für laufende Adressen angeschlossen ist und mit einem zweiten Eingang an den Ausgang des ersten programmierbaren Zählers (16) des Abtastblockes (2) angeschlossen ist, sowie einen zweiten Komparator (3V) enthält, der mit einem Eingang an den Ausgang des zweiten Zählers (9) des Generators (8) für die laufende Adresse angeschlossen ist und mit einem zweiten Eingang an den Ausgang des zweiten programmierbaren Zählers (15) des Abtastblocks (2) angeschlossen ist, um eine Gleichheit zwischen der Adresse des laufenden Punktes und der Adresse des gewünschten Punktes, der in dem ersten und in dem zweiten programmierbaren Zähler (16, 15) enthalten ist, festzustellen und die Steuerung des Abtastblockes (2) freizugeben,

— einen Analog/Digital-Umsetzer (13), der einen Umsetzzyklus aufweist und an den Abtastblock (2) angekoppelt ist, um die Amplitude der durch den Abtastblock (2) gelieferten Abtastproben in Digitalsignale umzusetzen und bei Beendigung der Umsetzung ein Inkrementiersignal anlegt, um die Inhalte des ersten und des zweiten programmierbaren Zählers (16, 15) um eine Einheit zu inkrementieren, und eine Steuerlogik (19) welche durch den digitalen Rechner gesteuert wird und durch die laufende Adresse adressiert wird, um die Steuersignale für den Abtastblock zu liefern.

2. Gerät nach Anspruch 1, dadurch gekennzeichnet, daß die Signale zum Inkrementieren der Inhalte des ersten und des zweiten programmierbaren Zählers durch die Steuervorrichtung (21) der Vorrichtung zur Erfassung der Fernsehsignale freigegeben werden.

3. Gerät nach Anspruch 1, dadurch gekennzeichnet, daß der Abtastblock ferner ein Verarbeitungsnetzwerk (11) für die empfangenen Fernsehsignale enthält, welches zwischen den Abtaster (12) und den Eingang der Vorrichtung eingefügt ist, um das Signal vor seiner Übertragung zu dem Abtastblock zu dämpfen und/oder zu filtern, um seine Amplitude und/oder sein Spektrum an das Fernsehsignalformat anzupassen.

**Claims**

1. Apparatus for the seizure of television signals each of which is representative of the luminance and chrominance states of a point of a television image in view of its characterization by a digital computer, characterized in that it comprises:

— a current address generator composed of a first counter (8) progressing at the rhythm of the sampling moments of the current point to provide the address of the current point on a scanning line of the television image and a second counter (9) progressing at the rhythm of the line synchronisation signals of the television signal to provide the address of the current point,

— a sampling block (2) for the sampling of the television signals received by the apparatus, comprising a first register (18) for storing the address of the point on the line to be sampled and a second register (17) for storing the line address of the point to be sampled, respectively coupled to a first and to a second programmable counter (16, 15) adapted to load the contents of the first and second registers for storing the address of the sampled point,

— a comparing device comprising a first comparator (3H) connected at one input to the output of a first counter (8) of the current addresses generator and connected with a second input to the output ot the first programmable counter (16) of the sampling block (2), as well as a second comparator (3V) connected with one input to the output of the second counter (9) of the current address generator (8) and connected with a second input to the output of the second programmable counter (15) of the sampling block (2) to detect an equality between the address of the current point and the address of the desired point contained in the first and second programmable counters (16, 15) and to authorize the control of the sampling block (2),

— an analog-digital convertor (13) having a conversion cycle and coupled to the sampling block (2) to convert the amplitude of the samples supplied by the sampling block (2) into digital signals and to apply to the first and second programmable counters (16, 15) a signal for the incrementation by one unit of their contents at the end of conversion,

— and a control logic (19) controlled by the digital computer and addressed by the current address to supply the control signals of the sampling block.

2. Apparatus according to claim 1, characterized in that the signals for the incrementation of the contents of the first and second programmable counters are enabled by the control device (21) of the device for the seizure of the television signals.

3. Apparatus according to claim 1, characterized in that the sampling block further comprises a processing network (11) for the processing of the received television signals which is interposed between the sampler (12) and the input of the device to attenuate and/or filter the signal prior to its transmission to the sampling block in order to adapt its amplitude and/or spectrum to the format of the television signal.

Fig.1

Fig.3

# Fig.2

SIGNAUX

4 — SÉLECTEUR

SÉPARATEUR
10

5 — SÉPARATEUR SYNCHRO
RAZ

E
RÉSEAU DE TRAITEMENT
11

6 — COMPARATEUR DE PHASE

7 — OSCILLATEUR 32 MHz

9 COMPTEUR V

8 COMPTEUR H

2

3

3H
3V COMPARATEUR

COMPARATEUR
COMPH
COMPV

19
LOGIQUE DE COMMANDE

AUTORISATION DE CONVERSATION

12
ÉCHANTILLON-NEUR

SAC

15 COMPTEUR VERTICAL

16 COMTEUR HORIZONTAL

DISPOSITIF DE COMMANDE

21

13
CONVERTISSEUR A/N

17 REGISTRE V

18

REGISTRE H

20 AMPLIFI-CATEURS

INC

14
REGISTRE

22
REGISTRE DE CONTRÔLE

23

ENTRÉE CALCULATEUR

COMPTEUR V

RØM — 37

— 21

MASQUE — 39 → SAC

REGISTRE — 38

BUS 23

# Fig.4

AUTORISATION
DE CONVERSATION

ET — 41 — 19

COMP H

OU — 40

COMP V        SAC

# Fig.5

5